# EUROPEAN PATENT APPLICATION

(11) **EP 3 242 095 A1**
(43) Date of publication of application: **08.11.2017**
(21) Application number: 15875291.5
(22) Date of filing: 29.12.2015
(51) Int. Cl.: F24J 2/54

(54) **PHOTOVOLTAIC SOLAR TRACKER FOR HIGH CONCENTRATION**

(30) Priority: 31.12.2014 ES 201431975
(71) Applicant: Abengoa Solar New Technologies, S.A., 41014 Sevilla (ES)
(72) Inventor: NOLASCO MOMPEÁN, Ignacio, 41014 Sevilla (ES); CAPARRÓS JIMÉNEZ, Sebastián, 41014 Sevilla (ES)
(74) Representative: Pons
(86) International application number: PCT/ES2015/070961
(87) International publication number: WO 2016/107954

(57) **Abstract**

The invention relates to a photovoltaic solar tracker with a structure comprising a post (1) with foundations in the ground, configured to transmit the loads of the structure to the ground, an actuating mechanism and a plurality of solar collection elements. The solar tracker has a lower mass than those known in the state of the art, and better bears the forces given that it comprises at least a number of main beams (4, 6) between which are located a plurality of structural modules (7), in which the solar collection elements are accommodated, which are joined rigidly to one another and to a central longitudinal beam (4) and an external longitudinal beam (6) facing same. The solar tracker preferably also comprises an upper support structure that works with traction in order to reduce the deformations in the structure.

## Description

### OBJECT OF THE INVENTION

The present invention falls within the technical field of photovoltaic solar energy, and more specifically, in the field of solar trackers.

A photovoltaic solar tracker for high concentration is described, in which high concentration solar modules are part of the structure of the tracker itself intended for supporting them, and acting as beams for the same, collaborating in the distribution of loads and reducing the total weight of the structure.

### BACKGROUND OF THE INVENTION

In order to maximize the energy production of concentration photovoltaic systems it is necessary to minimize tracking errors. In general, the higher the concentration factor of photovoltaic systems, the more demanding the requirement of minimizing said tracking errors. In other words, an increase in the concentration factor leads to a decrease in the acceptance angle of the optical system.

In the field of high-concentration photovoltaics (>1000x), it is estimated that the maximum tracking error of the solar trackers should be in the order of milliradians. The degree of precision of said error is similar to that of heliostat tracker mechanisms. Solar trackers have two degrees of freedom in order to meet these strict tracking requirements. The normal of the solar collecting surface must be parallel to the direction of the sun's radiation, thus requiring the solar tracker being able to regulate its position on two axes and achieve perfect adjustment.

Solar trackers with two degrees of freedom can be classified as single pole trackers comprising a single vertical shaft on which the tracking mechanism and the collector plane are placed, and as carousel, which is formed by a spatial structure supported on a plurality of rolling supports.

In single pole solar trackers, structural stresses are transmitted to the ground through the central post, which would require a very solid foundation. The structural elements that make up this kind of solar trackers are: a post for transmitting the load to the foundation, a pair of arms for stiffening the assembly (minimizing deformations in order to meet tracking requirements and providing the system with adequate strength), and a lattices assembly to form the matrix on which the solar collection elements rest.

The main forces that are to be supported by a solar tracker are its own weight, inertia forces due to the motion of the tracker and the most common wind speeds in the area. Solar trackers should have minimal deformation when they are subjected to these forces in order to minimize tracking errors. A solar tracker must be able to continue operating under the stresses it undergoes without having its structure deformed in excess.

A very important technical problem associated with the described conditions is that in order to resist certain forces, more steel mass must be added to the structure of the solar tracker. This is associated with an increase in costs and in weight of the tracker and furthermore, it has a negative impact on tracking accuracy (due to the higher weight it is more complicated the movement to a specific position). In addition, it is essential to keep tracking errors to a minimum; this is directly related to improving resistance in order to prevent deformation caused by the weight, the wind and inertial forces.

Solutions such as those described in US20090107542, which suggest the use of tensioning cables, are known in the state of the art. A technical problem associated with the use of this solution is that it comprises a plurality of support elements arranged on the lenses of the solar collector that cast shadows and therefore reduce the efficiency of the collector. Furthermore, the structure proposed in said document comprises a single mast from which the cables depart, which would not make it sufficiently resistant to the wind loads that must be supported by the collector. Another drawback linked to this solution is that there is no structural continuity between the elements of the collector.

### DESCRIPTION OF THE INVENTION

The present invention describes a solar tracker with high-concentration photovoltaic modules in which the solar collection elements are modules that comprise a casing, at least one integrated primary concentration lens, at least one photovoltaic cell and cabling. The modules of the present invention are shaped so as to act as a structural element of the tracker itself.

The structural modules of the trackers of the state of the art are supported by structural elements, such as for example, lattices, and the present invention eliminates part of these structural support elements. Furthermore, since the modules act as structural elements, they can support loads, transmit loads to the rest of the structure and support deformations caused by said loads, deforming minimally. Similarly, one of the most important advantages associated with the proposed new configuration is that the mass of the tracker's structure is reduced. In the most cases, the achievable reduction in the mass of the tracker's structure for solar trackers of a given power relative to those currently known in the state of the art is more than half of its own mass.

This advantage of the reduction of the mass of the tracker's structure implies a reduction in the loads that the structure itself has to support (they are lower because the mass is smaller) and additionally, the inertia forces which are directly proportional to the mass of the body are also reduced.

In the state of the art, each high-concentration photovoltaic module acts as an independent element whereas in the configuration of the proposed solar tracker the modules are joined to each other, forming secondary beams, and are joined to the main beams.

These secondary beams collaborate in the structure of the tracker because of their high rigidity to torsion, which limits the bending of the main beams, and also allows limiting the deformations of the assembly as the secondary beams are connected to the main beams.

The high-concentration photovoltaic solar tracker comprises a structure with a post on a ground foundation, configured to transmit the loads of the structure to the ground, a drive mechanism and a plurality of solar collection elements. The drive mechanism could be electromechanical or hydraulic.

The key feature of the proposed solar tracker is that the support structures of the solar collection modules commonly used in the state of the art have been eliminated and have been replaced by a plurality of modules that form the beams themselves. In an exemplary embodiment, each beam could be formed by a single large-sized module such that each module acts as a single beam.

The structure of the described solar tracker comprises main beams that are arranged on the ends of each block of modules and are perpendicular thereto. Each assembly of adjacent modules joined together or each large-sized module forms the secondary beams that are arranged between the main beams, preferably perpendicular thereto.

More specifically, the main beams are two central main beams comprising joining elements to the drive mechanism in their central portion, and two outer main beams, each facing one of the central main beams. The central main beams are arranged one on each side of the post, joined to the mechanism intended for orienting the solar tracker by means of a rigid join element.

Secondary beams are arranged between the main beams, formed by the joining of a plurality of modules or by a large-sized module. The modules have a straight prism configuration with lateral walls configured to form a rigid joint with the lateral walls of the adjacent modules forming secondary beams. These secondary beams are part of the solar tracker's own structure acting on the transfer of loads, stiffening the assembly formed by the secondary beams themselves and the main beams, and absorbing stresses like the main beams. Furthermore, the secondary beams are rigidly joined to the corresponding main beams (they are arranged between a central main beam and the outer main beam facing it).

In the solar trackers of the state of the art, the primary concentration lenses were arranged on the structural support elements of the modules (generally lattices) and bolted to them, therefore behaving like an additional suspended mass, which the structure of the solar tracker has to support. In order to support this additional mass, the structural support elements of the state of the art are very thick, which implies that a large amount of steel is required for its manufacturing, thus increasing the cost and the mass of the tracker's structure.

In contrast, in the present invention the modules are rigidly joined to each other forming secondary beams (acting in the distribution of loads) and in turn the main beams are rigidly joined. In addition, the modules contribute to increasing the rigidity of the tracker since, given their structural configuration, they respond very well to torsion and bending.

In another exemplary embodiment, the joining between the modules is carried out by means of intermediate pieces that enable a rigid connection to the adjacent modules (optionally, to the side covers). These pieces may, for example, be in the shape of horseshoes adapted to the perimeter of the lateral walls or have another configuration that allows said joint to be carried out. Similarly, the parts can be rigidly joined together by means of rivets, screws, continuous spot welding, etc.

Another advantage associated with the use of the described modules of the secondary beams (or of the large-sized modules each forming a secondary beam) and the use of the main beams is that many intermediate fastening elements and additional structural elements (for example, lattices) are eliminated with respect to configurations of the state of the art, thereby greatly reducing the amount of material to be used (generally steel).

The solar tracker may also comprise torque arms that extend from the joining element of the central main beams and extend in a perpendicular direction to the outer main beams. In other words, the torque arms extend between the joining element of the central main beams and the outer main beams. This embodiment is intended for solar trackers in which the structural modules of the central portion of the collecting surface undergo deformations due to high loads. In these cases, the torque arms release load to said central structural modules.

Both in the embodiments in which the solar tracker comprises torque arms and those in which it does not, the solar tracker may comprise an upper support structure comprising at least:
- a mast extending from the central main beams perpendicular to the collecting surface (formed by the main beams and the secondary beams), and
- a plurality of suspension elements extending from the mast to different points of the main beams.

The suspension elements are distributed in a way that does not enable shadows to be cast on the collector elements (the high-concentration photovoltaic modules). Thus, they provide the advantage of enabling the loads that the main and secondary beams support to be distributed, without negatively affecting the production of the solar tracker.

Preferably, the suspension elements are joined to at least the mid points of the central main beams and to the mid points of the outer main beams.

In this upper support structure comprising a plurality of suspension elements that extend to the main beams, the suspension elements are tensile to counteract the forces due to the own mass of the tracker and the winds acting against the collection surface. This enables deformations in the modules and the main beams to be reduced. In this configuration in which the solar tracker comprises an upper support structure, the tracker no longer has a bracket-type structure such as the solar trackers of the state of the art, but rather it has a structure on two supports (this type of structure undergoes minor deformations).

The preferred embodiment of the present invention is the embodiment in which the tracker has structural modules rigidly joined to each other acting as secondary beams rigidly joined to the main beams, and, in addition, it has the upper support structure.

The upper support structure is particularly advantageous because a much lighter structure is achieved by changing the configuration and adding the main beams and the modules forming the secondary beams. In order to deform the support structure, it would be necessary for the support elements to deform and give way, but the support elements are able to support the loads due to their mass or to the wind and thus ensure that the assembly remains stable and does not deform.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1 shows a perspective view from the upper side of the solar tracker wherein the main beams and the secondary beams formed by a plurality of modules can be seen.
Figure 2 shows a perspective view from the lower side of the solar tracker shown in Figure 1.
Figure 3 shows a view of the secondary beam with a plurality of modules rigidly joined together.
Figure 4 shows a view of the main beams and the upper support structure that the solar tracker may comprise.
Figure 5 shows a perspective view of the solar tracker in the embodiment in which it comprises the upper support structure.

### PREFERRED EMBODIMENT OF THE INVENTION

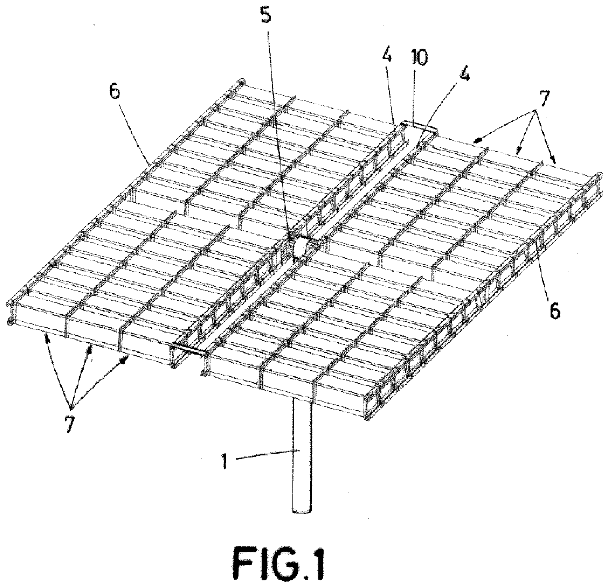

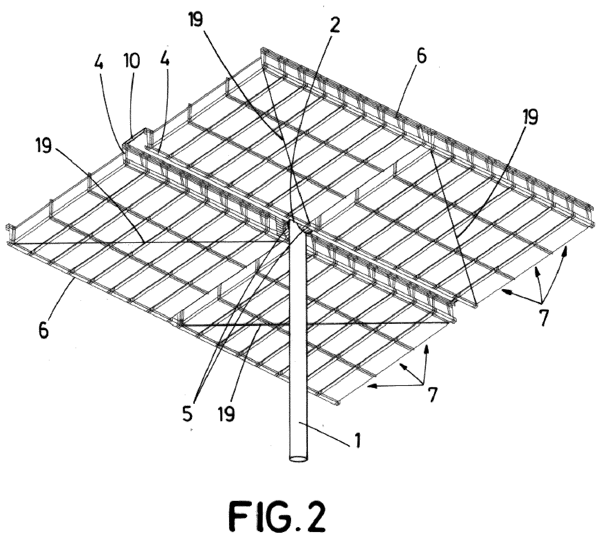

What follows is a description, with the help of Figures 1 to 5, of examples of embodiment of the invention.

A high-concentration photovoltaic solar tracker is proposed comprising a post (1) on a foundation, configured to transmit the loads of the structure to the ground and with a tracking mechanism arranged on the upper end (2) of the post (1). The tracker comprises a plurality of primary concentration lenses for capturing solar radiation. A first exemplary embodiment relates to a solar tracker with high-concentration photovoltaic modules.

Therefore, a portion of the collecting surface is arranged on each side of the post (1). The collecting surface of each side is formed by a central main beam and an outer main beam, and arranged between them there are the high-concentration photovoltaic modules forming the secondary beams (or a large-sized module which in itself is a secondary beam). The two central main beams (4) comprise joining elements (5) in their central portions, intended to carry out joining to the drive mechanism. They are joined at the upper end (2) of the post, wherein the tracking mechanism is located. Similarly, two outer main beams (6) are arranged each parallel to a central main beam (4).

The solar tracker comprises solar collection elements, which are high-concentration photovoltaic modules (7) having a primary concentration lens (3) integrated into one of its faces. Said modules (7) are rigidly joined to one another.

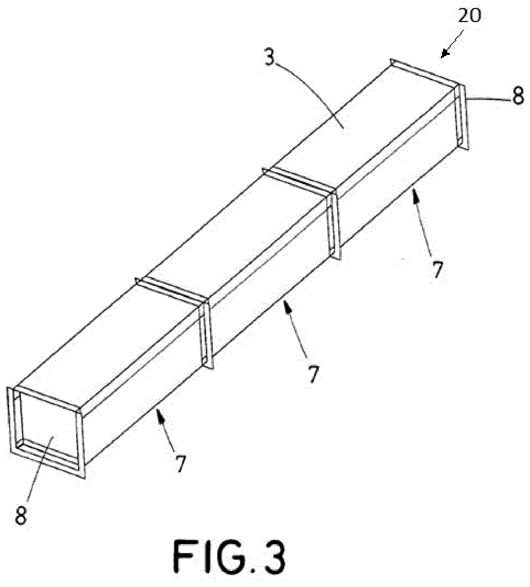

As shown in figure 3, the modules (7) have a straight prism configuration with lateral walls (8) configured to be rigidly joined to the lateral walls (8) of the adjacent modules (7) forming secondary beams (20). These secondary beams (20) are rigidly joined to a central main beam (4) and an outer main beam (6) facing it, acting as an integrating part of the structure of the tracker itself.

Preferably the lateral walls (8) are sheets approximately 1 mm thick and conveniently stiffened by ribs. These lateral walls (8) act as joining flanges between modules (7) and between the modules (7) and the main beams (4, 6). These joints are capable of transmitting bending and torsion stresses. Preferably, these joints are carried out by screws although they can also be welded.

The high-concentration photovoltaic modules (7) comprise at least one primary concentration lens (3), which is the upper face of the module (7), and lower and lateral walls (8) formed of steel sheet. The lens (3) is made of glass for transmitting solar spectrum light and because it is resistant to high temperatures.

Said modules (7) work in a mixed manner as the primary concentration lens (3) acts to support the compression loads and the steel sheet of the walls, which is thin, acts to support the tensile loads. Thanks to the configuration of the proposed module (7) very advantageous results are obtained in terms of stress support, since the two materials (glass lens and steel casing) work in the best conditions for them. In addition, since it is a closed module (7), positive results are also achieved for torsion.

In another exemplary embodiment, joining between the modules (7) is carried out by means of intermediate pieces, which join to the modules (7) by means of rivets and allow a rigid connection to the lateral walls (8) of adjacent modules (7). These pieces may, for example, be in the shape of horseshoes adapted to the perimeter of the lateral walls (8).

Essentially, the modules must adapt to the working conditions of the solar tracker with the least possible deformation, resist the wind load without reaching the yield stresses of the steel, prevent the fracture of the lens glass and remain stable against the buckling of the sheets that form its walls.

The primary concentration lens (3) is a structural component of the module (7) and is capable of supporting deformations and load stresses because it is joined to the casing by means of a structural adhesive, which further provides the system with a degree of flexibility. An example of an adhesive would be silicone.

Preferably, the assembly of photovoltaic cells and secondary optical are arranged inside the module (7). Additionally, heat dissipation means consisting of an active or passive cooling system can be arranged to evacuate the heat produced in the cell (high temperature of the cell). The heat dissipators can be outside the module, and there may be some thermal paste stuck between the cell and the casing on the inside.

Also preferably, the main beams (4, 6) are formed of steel sheet. They may for example have a "C" configuration so that the secondary beams (20) are arranged between the arms of the "C" in order to ensure a better fit. The main beams may have other configurations but they must comply with the requirement of having at least one flat surface to which the secondary beams (20) are joined. Furthermore, the main beams (4, 6) could comprise a plurality of first stiffeners (21) arranged in a transverse direction. Preferably, the first stiffeners (21) are welded to the main beams in order to improve behavior against buckling due to torsion and lateral buckling of the compressed wing.

The main beams transmit the stresses to the joining area of the post (1) of the solar tracker. The central main beams (4) are thicker than the outer main beams (6) since they have to support greater loads and they further comprise the joining elements (5) to the post (1).

In addition, the tracker structure may comprise joining elements between main beams (10) which are pieces intended to connect the two central main beams together. These joining elements between main beams (10) are arranged on the ends of the central main beams allowing the loads to pass therebetween and helping to stabilize the structure.

It may also comprise second stiffeners (19) extending through the lower walls of the modules (7) between the central (4) and outer (6) main beams, in order to prevent excessive deformations when the solar tracker is moved into the vertical position, in other words, in the position in which the collection surface is practically perpendicular to the ground.

In this embodiment of the invention, the advantage of placing the solar tracker into a vertical position is obtained because it comprises the joining elements of the main beams that provide structural continuity.

Other advantages associated with the use of the proposed configuration are that the mounting of the assembly is simple.

Additionally, the structure of the solar tracker may comprise an upper support structure comprising at least one mast (11) formed by a lattice extending from the central main beams (4) at the point where the joining elements (5) to the post (1) are placed, perpendicularly to said central main beams (4); and support elements (12) extending from the mast (11) and that are joined to the central main beams (4) and to the outer main beams (6).

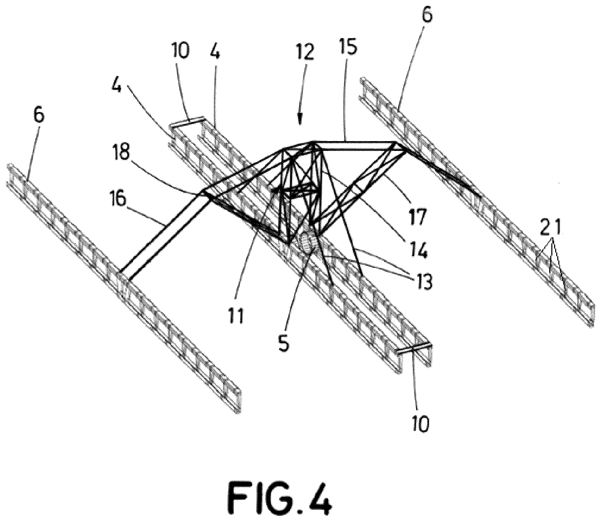

Figure 4 shows a preferred embodiment of the invention in which the mast (11) is formed by a lattice with hollow tubular profiles and comprises four straight profiles (14) which are arranged two in each central main beam (4) at each side of the joining elements (5) with the post (1). The mast (11) gathers the stresses transmitted by the support elements (12) and transmits them to the post (1) through the joining elements (5).

In an exemplary embodiment, the upper support structure comprises additional support elements (13) extending from the mast (11) to a point of the central main beams (4). In an exemplary embodiment shown in the figures, the additional support elements (13) extend to the mid point of the central main beams (4). The position will depend on the particular design of the solar tracker. These support elements transmit the stresses of the central main beams (4) to the mast (11) and thence, to the post (1).

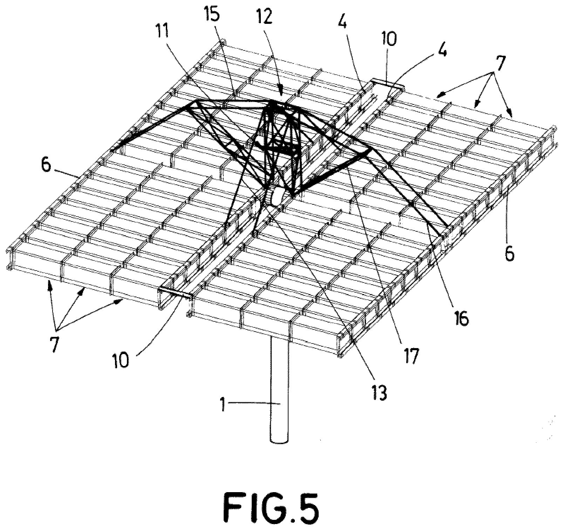

In a preferred embodiment of the invention as shown in Figures 4 and 5, the support elements (12) comprise a first portion (15) extending from the mast (11) to a bending point (18) in which it joins to a second portion (16) extending to the corresponding outer main beam (6) and to a third portion (17) extending to the corresponding central main beam (4).

A prerequisite that the support elements (12) must meet is that the compressive force of the third portion (17), that works under compression under a pressure load plus a gravitational load (load perpendicular to the modules (7) acting on the primary concentration lenses (3) towards the ground), must be equal to the compressive force of the first portion (15) and the second portion (16) that work under compression under a suction load plus gravitational load (load perpendicular to the modules (7) acting on the lower faces of the modules (7) from the ground).

Furthermore, the length of the mast (11) should be such that the angles forming the portions of the support elements (12) and the mast (11), minimize the buckling length of the portions (15, 16, 17) of the support elements (12). The length of the mast must also meet the condition of being as short as possible fulfilling the conditions set forth above for reducing material and lowering costs.

The solar tracker for high concentration described herein allows wind loads of up to 30 km/h in a tilted position (position in which the collecting surface is inclined so that the normal of said surface is parallel to the rays of the sun) and of up to 140 km/h in horizontal position (position in which the collecting surface is parallel to the ground facing upward so that strong winds have a minimum effect on said collecting surface) to be supported.

In addition, the solar tracker of the preferred embodiment, which comprises high-concentration photovoltaic modules that act as structural elements and the upper support structure, can support the same loads as a solar tracker having more than twice the weight than that of the present invention. In other words, the same resistance results are obtained with a tracker having half the weight (and therefore much less cost) as those with solar trackers of the state of the art. In an exemplary embodiment, the weight of a tracker having a surface area of 90 m² and a collector power of approximately 25 kWp has been reduced to an approximate range of between 890 and 1000 kg.

## Claims

1. A photovoltaic solar tracker for high concentration with a structure comprising:
- a post (1) with a ground foundation, configured to transmit loads of the structure to the ground,
- a drive mechanism,
- a plurality of solar collection elements,
and **characterized in that** it comprises at least:
- two central main beams (4) comprising, in their central portion, joining elements (5) to the post, which are arranged one on each side of the post (1) joined to the upper end (2) thereof,
- two outer main beams (6) each facing a central main beam (4),
and wherein the solar collection elements are formed by high-concentration photovoltaic modules (7) rigidly joined to one another and to a central main beam (4) and to an outer main beam (6).

2. The photovoltaic solar tracker for high concentration according to claim 1, **characterized in that** the modules (7) have a straight prism configuration with lateral walls (8) configured to be rigidly joined to the lateral walls (8) of adjacent modules (7) forming secondary beams (20) which are rigidly joined to a central main beam (4) and to an outer main beam (6) facing it.

3. The photovoltaic solar tracker for high concentration according to claim 1, **characterized in that** the adjacent modules (7) are joined to one another by means of rivets.

4. The photovoltaic solar tracker for high concentration according to claim 1, **characterized in that** the adjacent modules are rigidly joined to one another by means of intermediate pieces that are joined to the modules (7) by means of rivets.

5. The photovoltaic solar tracker for high concentration according to claim 1, **characterized in that** the high-concentration photovoltaic modules comprise a primary concentration lens (3), which is the upper face of the module (7) and lower and lateral walls (8) formed of steel sheet.

6. The photovoltaic solar tracker for high concentration according to claim 5, **characterized in that** the steel sheets of the modules (7) are ribbed sheets.

7. The photovoltaic solar tracker for high concentration according to claim 1, **characterized in that** the main beams (4, 6) are formed of steel sheet.

8. The photovoltaic solar tracker for high concentration according to claim 7, **characterized in that** the main beams (4, 6) have a "C" configuration.

9. The photovoltaic solar tracker for high concentration according to claim 7, **characterized in that** the main beams (4, 6) comprise a plurality of first stiffeners (21) arranged in transverse direction.

10. The photovoltaic solar tracker for high concentration according to claim 1, **characterized in that** it further comprises joining elements between main beams (10), which are pieces intended to connect the two central main beams (4) together.

11. The photovoltaic solar tracker for high concentration according to claim 1, **characterized in that** it further comprises second stiffeners (19) extending through the lower walls of the modules (7) between the central main beams (4) and the outer main beams (6).

12. The photovoltaic solar tracker for high concentration according to claim 1, **characterized in that** it further comprises torque arms extending from the joining elements (5) of the central main beams (4) to the outer main beams (6).

13. The photovoltaic solar tracker for high concentration according to claim 1, **characterized in that** it further comprises an upper support structure comprising at least:
- a mast (11) formed by a lattice extending from the central main beams (4) at the point where the joining elements (5) to the post (1) are placed, perpendicularly to said central main beams (4),
- supporting elements (12) extending from the mast (11) and that are joined to the central main beams (4) or to the outer main beams (6).

14. The photovoltaic solar tracker for high concentration according to claim 13, **characterized in that** the upper support structure further comprises additional support elements (13) extending from the mast (11) to the central main beams (4).

15. The photovoltaic solar tracker for high concentration according to claim 13, **characterized in that** the support elements (12) comprise a first portion (15) extending from the mast (11) to a bending point (18) in which it joins to a second portion (16) extending to the outer main beam (6) and a third portion (17) extending to the central main beam (4).

16. The photovoltaic solar tracker for high concentration according to claim 15, **characterized in that** the support elements (12) meet the prerequisite that the compressive force of the third portion (17) under pressure load plus a gravitational load is equal to the compressive force of the first portion (15) and the second portion (16) that work under compression under a suction load plus gravitational load.

17. The photovoltaic solar tracker for high concentration according to claim 15, **characterized in that** the length of the mast (11) is the minimum length which allows the angles forming the portions (15, 16, 17) of the support elements (12) and the mast (11) to minimize the buckling length of the portions (15, 16, 17) of the support elements (12).
